# EUROPÄISCHE PATENTANMELDUNG

(11) **EP 1 837 231 A1**
(43) Veröffentlichungstag der Anmeldung: **26.09.2007**
(21) Anmeldenummer: 07003095.2
(22) Anmeldetag: 14.02.2007
(51) Int. Cl.: B60N 2/44

(54) **Konturverstellbarer Fahrzeugsitz mit einer Rückenlehne**

(30) Priorität: 17.03.2006 DE 102006012377
(71) Anmelder: Bayerische Motoren Werke Aktiengesellschaft, 80809 München (DE)
(72) Erfinder: Lein, Rudolf, 85221 Dachau (DE); Reisinger, Johann, 85737 Ismaning (DE)

(57) **Zusammenfassung**

Es ist ein konturverstellbarer Fahrzeugsitz mit einer Rückenlehne bekannt. lm Lordosenbereich der Rückenlehne bilden mehrere übereinander angeordnete Luftkissen eine Lordosenkontur. Ein Steuergerät mit einer angeschlossenen Bedieneinheit steuert den Fülldruck in den Luftkissen, sodass über die Bedieneinheit die gewünschte Sitzkontur im Lordosenbereich eingestellt werden kann. Aufgabe der Erfindung ist es, einen konturverstellbaren Fahrzeugsitz mit einer Rückenlehne zu schaffen, die im Lordosenbereich einen hohen Sitzkomfort aufweist.

Erfindungsgemäß weist ein konturverstellbarer Fahrzeugsitz an der Rückenlehne im Lordosenbereich mindestens zwei Luftkissen (3', 5', 6') auf, die je nach Füllmenge eine unterschiedliche Lordosenkontur erzeugen. Dabei ist ein oberes Luftkissen (3') mit der Rückenlehnenstruktur verbunden. Zumindest ein zweites Luftkissen (5') ist am oberen Luftkissen (3') angebunden. Dabei ist das zweite Luftkissen (5') vorteilhafterweise auf der dem Passagier zugewandten Seite des oberen Luftkissens (3') angebunden.

## Beschreibung

Die Erfindung betrifft einen konturverstellbaren Fahrzeugsitz mit einer Rückenlehne nach dem Oberbegriff des Patentanspruchs 1.

Aus der DE 199 34 472 A1 ist ein konturverstellbarer Fahrzeugsitz mit einer Rückenlehne bekannt. Im Lordosenbereich der Rückenlehne bilden mehrere übereinander angeordnete Luftkissen eine Lordosenkontur. Ein Steuergerät mit einer angeschlossenen Bedieneinheit steuert den Fülldruck in den Luftkissen, sodass über die Bedieneinheit die gewünschte Sitzkontur im Lordosenbereich eingestellt werden kann.

Aufgabe der Erfindung ist es, einen konturverstellbaren Fahrzeugsitz mit einer Rückenlehne zu schaffen, die im Lordosenbereich einen hohen Sitzkomfort aufweist.

Diese Aufgabe wird mit einem konturverstellbaren Fahrzeugsitz mit einer Rückenlehne mit den Merkmalen des Patentanspruchs 1 gelöst.

Erfindungsgemäß weist ein konturverstellbarer Fahrzeugsitz an der Rückenlehne im Lordosenbereich mindestens zwei Luftkissen auf, die je nach Füllmenge eine unterschiedliche Lordosenkontur erzeugen. Dabei ist ein oberes Luftkissen mit der Rückenlehnenstruktur verbunden. Zumindest ein zweites Luftkissen ist am oberen Luftkissen angebunden. Bevorzugt erstreckt sich das zweite Luftkissen weiter nach unten als das obere Luftkissen. Das zweite Luftkissen ist vorteilhafterweise auf der dem Passagier zugewandten Seite des oberen Luftkissens angebunden. Günstigerweise ist das zweite Luftkissen mit seinem oberen Randbereich in Höhenrichtung im mittleren Bereich des oberen Luftkissens an diesem angebunden. Bevorzugt ist an dem zweiten Luftkissen wiederum ein weiteres Luftkissen angebracht, an dem wie bei einer Kette ein oder mehrere weitere Luftkissen angebracht sein können. Die weiteren Luftkissen sind günstigerweise jeweils auf der dem Passagier zugewandten Seite des darüber angeordneten Luftkissens angebunden.

Beim Stand der Technik sind alle Luftkissen jeweils unabhängig voneinander mit der Rückenlehnenstruktur verbunden. Dadurch ergeben sich auf der dem Passagier zugewandten Seite der Lordosenkontur Unstetigkeiten zwischen den einzelnen Luftkissen, wenn diese aufgeblasen sind. Diese Unstetigkeiten werden noch dadurch größer, dass die Höhenerstreckung der einzelnen Luftkissen beim Aufblasen abnimmt. Die Unstetigkeiten sind durch das Polsterteil der Rückenlehne hindurch spürbar und mindern sowohl die Einstellbarkeit der Lordosenstütze als auch den Komfort der Rückenlehne. Erfindungsgemäß erfolgt die Anordnung der Luftkissen über eine direkte Kopplung der Luftkissen zueinander. Die Positionierung erfolgt somit relativ zum darüber angeordneten Luftkissen und nicht absolut zur Lehnenstruktur. Wenn beim Aufblasen der Luftkissen deren Höhenerstreckung abnimmt, weil die Luftkissen bauchiger werden, können sich alle Luftkissen unterhalb des oberen Luftkissens in Höhenrichtung translatorisch verlagern. Zudem bilden sich die Unstetigkeiten nicht auf der dem Passagier zugewandten Seite, sondern auf der dem Passagier abgewandten Seite der Luftkissen, wenn die weiteren Luftkissen jeweils auf der dem Passagier zugewandten Seite des darüber angeordneten Luftkissens angebunden sind. Dadurch ergibt sich zum Rücken des Passagiers hin eine homogenere Fläche, die mit einem erhöhten Lehnenkomfort verbunden ist. Zudem ist durch die Optimierung der Anordnung der Blasen zueinander eine verbesserte Verstellbarkeit der Lordosenstütze gegeben.

Weitere vorteilhafte Ausgestaltungen sind Gegenstand von Unteransprüchen.

In der Zeichnung ist ein Ausführungsbeispiel der Erfindung dargestellt, anhand dessen die Erfindung im Folgenden näher beschrieben wird. Die einzelnen Figuren zeigen in schematischer Darstellungsweise:
- Fig. 1: eine aus dem Stand der Technik bekannte Lordosenstütze eines Kraftfahrzeugsitzes und
- Fig. 2: eine erfindungsgemäße Lordosenstütze eines Kraftfahrzeugsitzes.

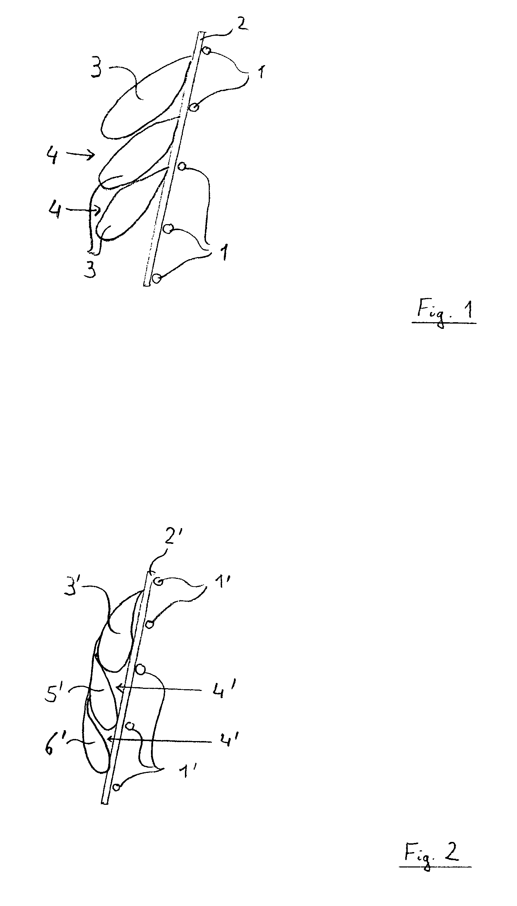

In Fig. 1 ist ein Schnitt durch eine aus dem Stand der Technik bekannte Rückenlehne eines Kraftfahrzeugsitzes im Lordosenbereich dargestellt. Die Rückenlehne weist umlaufend einen Lehnenrahmen auf, über den die Rückenlehne mit dem restlichen Fahrzeugsitz verbunden ist. Zwischen den beiden seitlichen Holmen des Lehnenrahmens sind mehrere Querdrähte 1 gespannt. Im Bereich der Lordosenstütze ist an diesen Querdrähten 1 auf der dem Passagier zugewandten Seite eine Filzmatte 2 befestigt. Auf der dem Passagier zugewandten Seite dieser Filzmatte 2 wiederum sind drei Luftkissen 3 jeweils unabhängig voneinander an der Filzmatte 2 angebracht. Die drei Luftkissen 3 sind übereinander angeordnet und überlappen sich zumindest im nicht aufgeblasenen Zustand teilweise.

Beim Befüllen dieser Luftkissen 3 mit einem Gas stützen sich die Luftkissen 3 an der Filzmatte 2 ab und bilden eine Lordosenstütze, die den Lendenwirbelbereich des Passagiers durch ein Rückenlehnenpolster der Rückenlehne hindurch spürbar unterstützt. Über die Füllmenge kann der Grad der Unterstützung des Lendenwirbelbereichs gesteuert werden. Im hier gezeigten aufgeblasenen Zustand der drei Luftkissen 3 bilden sich zwischen den Luftkissen 3 auf der dem Passagier zugewandten Seite jeweils Unstetigkeiten 4, die vom Passagier durch das Rückenlehnenpolster hindurch spürbar sind und den Komfort der Lordosenstütze mindern.

In Fig. 2 ist demgegenüber ein Schnitt durch eine erfindungsgemäße Rückenlehne eines Kraftfahrzeugsitzes im Lordosenbereich gezeigt. Auch diese Rückenlehne weist umlaufend einen Lehnenrahmen auf, über den die Rückenlehne mit dem restlichen Fahrzeugsitz verbunden ist. Zwischen den beiden seitlichen Holmen des Lehnenrahmens sind ebenfalls mehrere Querdrähte 1' gespannt. Im Bereich der Lordosenstütze ist ebenfalls an diesen Querdrähten 1' auf der dem Passagier zugewandten Seite eine Filzmatte 2' befestigt. Auf der dem Passagier zugewandten Seite dieser Filzmatte 2' ist ein oberes Luftkissen 3' angebracht. Etwa auf halber Höhe dieses oberen Luftkissens 3' ist auf dessen dem Passagier zugewandten Seite ein zweites Luftkissen 5' mit seinem oberen Rand angebunden. Dieses zweite Luftkissen 5' ist genauso groß wie das obere Luftkissen 3' und erstreckt sich somit weiter nach unten als das obere Luftkissen 3'. An dem zweiten Luftkissen 5' wiederum ist etwa auf halber Höhe auf dessen dem Passagier zugewandter Seite ein drittes Luftkissen 6' mit seinem oberen Rand angebunden, das ebenfalls genauso groß ist, wie das obere Luftkissen 3'. Das zweite und das dritte Luftkissen 5' und 6' sind also nicht an der Rückenlehne angebunden, sondern sind mit dem oberen Luftkissen 3' zueinander verkettet.

Beim Befüllen der drei Luftkissen 3', 5' und 6' mit einem Gas stützen sich die Luftkissen 3', 5' und 6' an der Filzmatte 2' ab und bilden ebenfalls eine Lordosenstütze. Im Gegensatz zum Stand der Technik entstehen die Unstetigkeiten 4' zwischen den drei Luftkissen 3', 5' und 6' bei der erfindungsgemäßen Anordnung aber auf der der Filzmatte 2' zugewandten Seite der Luftkissen 3', 5' und 6' und nicht auf der dem Passagier zugewandten Seite. Zudem können die beiden Luftkissen 5' und 6' in Abhängigkeit des Befüllgrades eine translatorische Bewegung in der Höhenrichtung der Rückenlehne vollziehen, sodass die entstehenden Unstetigkeiten 4' deutlich kleiner als beim Stand der Technik sind. Diese beiden Effekte tragen dazu bei, dass die erfindungsgemäße Lordosenstütze einen höheren Komfort als die bekannte Lordosenstütze für den Passagier bietet.

## Patentansprüche

1. Konturverstellbarer Fahrzeugsitz mit einer Rückenlehne, die im Lordosenbereich mindestens zwei Luftkissen (3', 5', 6') aufweist, die je nach Füllmenge eine unterschiedliche Lordosenkontur erzeugen, wobei ein oberes Luftkissen (3') mit der Rückenlehnenstruktur verbunden ist, **dadurch gekennzeichnet, dass** zumindest ein zweites Luftkissen (5') am oberen Luftkissens (3') angebunden ist.

2. Fahrzeugsitz nach Anspruch 1, **dadurch gekennzeichnet, dass** das zweite Luftkissen (5') sich weiter nach unten erstreckt, als das obere Luftkissen (3').

3. Fahrzeugsitz nach Anspruch 1 oder 2, **dadurch gekennzeichnet, dass** das zweite Luftkissen (5') auf der dem Passagier zugewandten Seite des oberen Luftkissens (3') angebunden ist.

4. Fahrzeugsitz nach einem der vorhergehenden Ansprüche, **dadurch gekennzeichnet, dass** das zweite Luftkissen (5') mit seinem oberen Randbereich in Höhenrichtung im mittleren Bereich des oberen Luftkissens (3') an diesem angebunden ist.

5. Fahrzeugsitz nach einem der vorhergehenden Ansprüche, **dadurch gekennzeichnet, dass** an dem zweiten Luftkissen (5') wiederum ein weiteres Luftkissen (6') angebracht ist, an dem wie bei einer Kette ein oder mehrere weitere Luftkissen angebracht sein können.

6. Fahrzeugsitz nach Anspruch 5, **dadurch gekennzeichnet, dass** die weiteren Luftkissen (6') jeweils auf der dem Passagier zugewandten Seite des darüber angeordneten Luftkissens (5') angebunden sind.

7. Fahrzeugsitz nach einem der vorhergehenden Ansprüche, **dadurch gekennzeichnet, dass** die Luftkissen (3', 5', 6') mit ihren dem Passagier abgewandten Seiten an einer Matte (2') anliegen, die mit der Rückenlehnenstruktur verbunden ist.
